# EUROPEAN PATENT APPLICATION

(11) **EP 1 666 852 A2**
(43) Date of publication of application: **07.06.2006**
(21) Application number: 06075548.5
(22) Date of filing: 11.07.2002
(51) Int. Cl.: G01G 19/12, G01G 21/23

(54) **Device for weighing a load**

(30) Priority: 11.07.2001 BE 200100470; 08.10.2001 BE 200100655
(62) Divisional of application: 02447132.8
(71) Applicant: PM On Board Ltd., Shipley, West Yorkshire BD2 1AG (GB)
(72) Inventor: Nuyts, Ludo, 2360 Oud-Turnhout (BE)
(74) Representative: pronovem

(57) **Abstract**

The present invention is related to a device for weighing a load comprising a supporting structure (2), a weighing structure (18), and one or more beam type load cells (1,40), wherein at least one of said load cells comprises a horizontal bore (31), and is fixed, preferably bolted to a supporting structure (2) at the side opposite said bore (31), and equipped with an auxiliary element (41, 61), which is connected to the weighing structure.

## Description

### Field of the invention

The present invention is related to installations for weighing loads. In particular, the invention is related to a device comprising a supporting structure or base frame and a weighing structure connected to said frame through a number of load cells. A prime application of this kind of structures is their use in mobile weighing systems.

### State of the art

Weighing systems exist, wherein a supporting structure, which we will also call a 'frame' or 'base frame' in this text, fixed to the ground or to a truck, is present. A weighing structure, for example a rectangular platform is suspended from this frame, or is resting on the frame wherein the load exerted by the weighing structure (and the weight placed on it) on the frame is measured by load cells, which are subjected to the forces applied by the weight. The present invention is in particular related to load cells which are of the 'beam' type. These have an elongated shape, wherein one part is connected to the frame, and the other to the weighing structure, so that the load exerts a bending or shear force on the cell, the latter being equipped with the proper means, such as strain gages and the like, for producing a signal which is equivalent to the load force.

It is known to use universal joints, e.g. ball joints in the connection points between the base frame and the load cell on the one hand and between the load cell and the weighing structure on the other. These joints allow a measurement to be performed even if the load is in a slightly tilted position. This is described for example in the documents EP-A-476778 and EP-A-603950. For evident reasons, the use of universal joints is especially useful in mobile weighing systems. However, the existing designs show deficiencies, which will be described in more detail in the following paragraph, with reference to a number of drawings. In general, it can be said that the deformation of the load cell is taking place in an undesirable way, leading to problems of inaccuracy of the measurement.

Another type of weighing device uses load cells which are rigidly fixed to the frame, i.e. without the use of universal joints. Such systems can be used only in a horizontal position, except when the system is equipped with a means for measuring the tilting angle, and performing a corrective calculation on the measured load. In this type of weighing system however, the connection between the load cell and the weighing structure needs to be extremely well designed. Existing systems of this kind are having to deal with problems of reproducibility of the measurement, due to inadequate design.

### Aims of the invention

The present invention aims to provide a weighing device equipped with load cells, preferably connected by universal joints to a supporting structure and to a weighing structure, which allows an improved accuracy of the measurement.

The invention is equally related to a weighing device equipped with load cells which are fixed to the supporting structure, and wherein a corrective action is taken in order to measure a load in a tilted position, wherein the connection between the weighing structure and the load cell does not suffer from the deficiencies of prior art designs.

### Summary of the invention

The present invention is related to a device for weighing a load, comprising a supporting structure, a weighing structure, and one or more beam type load cells, each load cell comprising a first part and a second part, with a separating section between both of said parts, one of said parts being connected to said supporting structure while the other of said parts is connected to said weighing structure,
characterized in that at least one load cell is attached to an auxiliary element, said element comprising :
- a base plate to which the first part of said load cell is rigidly connected,
- two side walls, rigidly connected to said base plate, and being placed on either side of said load cell, when the load cell is attached to said element.

According to the preferred embodiment, said auxiliary element further comprises a means for connecting said element to said supporting structure or to said weighing structure in a point which is placed on the side of said separating section which is opposite said first part.

Said means for connecting said element may comprise a pair of holes in said side walls, the line connecting the centre points of said holes being placed on the side of said separating section which is opposite said first part.

Alternatively, said means for connecting said element may comprise a solid block connecting said walls, said block comprising a cylindrical hole, the centre line of said hole being placed on the side of said separating section which is opposite said first part.

A second auxiliary element may be rigidly connected to said second part of said load cell.

The first auxiliary element may be connected to said supporting structure or to said weighing structure by a universal joint. Also, said second auxiliary element may be connected to said supporting structure or to said weighing structure by a universal joint.

According to one embodiment, said load cell comprises a bore in said second part, the centre line of said bore being essentially horizontal when said load cell is placed onto said base plate in an essentially horizontal position. Said load cell may be connected to said supporting structure or to said weighing structure by a universal joint.

The load cell is preferably bolted to said base plate, by two or more bolts.

The first auxiliary element and said load cell may form a homogenous block.

The invention is equally related to an auxiliary element for use as a supporting element of a load cell of the beam type, said load cell comprising a first part and a second part, with a separating section in between, said element comprising :
- a base plate to which the first part of said load cell is to be rigidly connected,
- two side walls, rigidly connected to said base plate, and being placed on either side of said load cell, when the load cell is attached to said element.

The invention is also related to a device for weighing a load, comprising a supporting structure, a weighing structure, and one or more beam type load cells, each load cell comprising a first part and a second part, with a separating section between both of said parts, one of said parts being connected to said supporting structure while the other of said parts is connected to said weighing structure, characterized in that at least one load cell is rigidly fixed, preferably bolted at said first part to said supporting structure, said load cell comprising a bore, the centre line of which is essentially horizontal when said cell is in a horizontal position, and wherein an auxiliary element is connected to said second part, said auxiliary element being connected to said weighing structure.

According to the invention, the auxiliary element described in the previous paragraph preferably comprises :
- two essentially parallel walls, each comprising at least one hole, so that said load cell can be placed in between said parallel walls,
- at least one force introduction element, which is in contact with said load cell,
and wherein said element is connected to said load cell by a pin which passes through said holes and through said bore.

The auxiliary element described in the last paragraph may comprise at least one threaded hole in its upper surface, and said force introduction element may be a bolt which is screwed into said hole in the upper surface of said auxiliary element.

Alternatively, said force introduction element may be a ball, which is clamped between two concave elements.

According to the preferred embodiment, a flexible element is present, which has a cylindrical part which fills up the space between said pin and the interior of said bore, and a circular part on each side of said cylindrical part, each of said circular parts being present between said essentially parallel walls and said load cell. Said flexible element is preferably made of a material having a hardness value of Shore 95°.

Said flexible element may comprise two sub-elements, both comprising a cylindrical part and a circular part.

Furthermore, a metal ring may be present between each side of said flexible element and said load cell.

According to the invention, the weighing device may comprise at least one auxiliary element described in the previous paragraphs 17 to 23, which is connected to two load cells, said load cells being placed opposite each other, one load cell being mirrored with respect to the other.

Still according to the invention, at least one auxiliary element described in the previous paragraphs 17 to 23 is connected to two load cells, said load cells being placed on top of each other.

The invention is equally related to a device for weighing a load, comprising a supporting structure, a weighing structure, and one or more beam type load cells, each load cell comprising a first part and a second part, with a separating section between both of said parts, one of said parts being connected to said supporting structure while the other of said parts is connected to said weighing structure, characterized in that at least one load cell is rigidly fixed, preferably bolted at said first part to said supporting structure, and wherein an auxiliary element is connected to said second part, said auxiliary element comprising a cavity for receiving said second part of said load cell, and wherein a flexible element is present at the bottom of said cavity, so that said load cell is supported by said flexible element.

### Short description of the drawings

Fig. 1 represents the type of load cell to which the present invention is related.

Fig. 2 and 3 represent prior art designs of load cell fixtures.

Fig. 4 represents a first embodiment of the present invention.

Fig. 5 represents a view of a first auxiliary element which is characteristic to the invention.

Fig. 6 represents a second embodiment of the invention.

Fig. 7 and 8 represent a load cell, respectively two load cells with a horizontal bore, equipped with another auxiliary element according to the invention..

Fig. 9 and 10 represent a first embodiment of the auxiliary element shown in figure 7 and 8.

Fig. 11 and 12 show the preferred embodiment of the auxiliary element shown in figure 7 and 8.

Fig. 13 shows a detailed view of the flexible element which is a part of the auxiliary element of figure 9 and 10.

Fig. 14 and 15 shows embodiments which have an Alternative force positioning element compared to the embodiments shown in figures 9 to 13.

Fig. 16 shows another embodiment, wherein two load cells are placed one above the other.

Fig. 17 shows a load cell, equipped with an auxiliary element, according to another embodiment of the invention.

### Detailed description of the invention

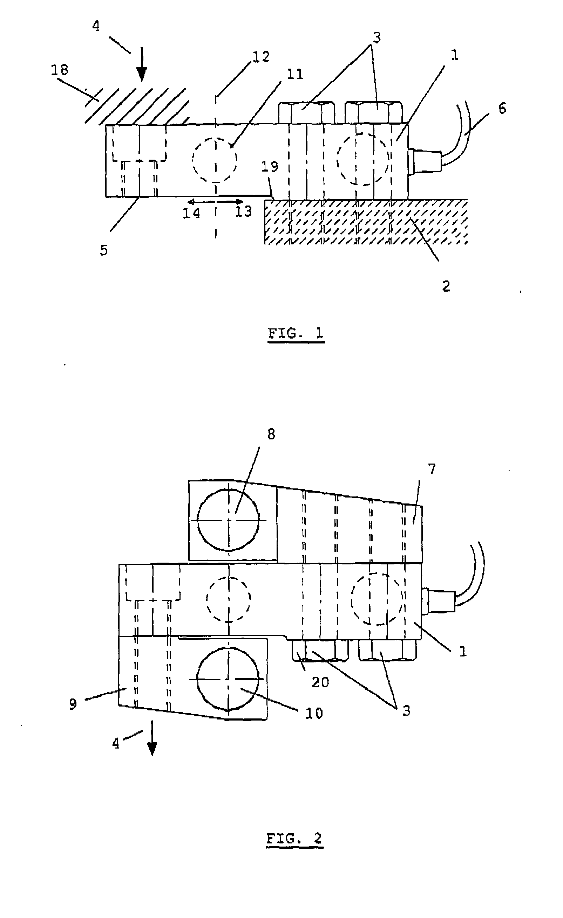

Figure 1 illustrates the type of load cell 1, to which the present invention is related. It is a load cell of the beam type. This type of load cell has the shape of an elongated beam, which is subjected to the load to be measured, said load causing a bending or shearing force to be exerted on the load cell. Most load cells of this type comprise a cavity 11, thereby creating a weakened section 12. It can be said that the load cell 1 comprises a first part 13, to the right of section 12, and a second part 14, to the left of section 12. Even if no weakened section is present, a load cell can generally be divided into two parts, separated by a section, wherein one part is connected to the supporting structure 2, while the other is connected to the weighing structure 18. In this way, the load cell is subjected during weighing to a bending or shear force. In figure 1, the load cell is fixed at the first part 13 to the supporting structure 2, by two bolts 3. The second part 14 carries the weighing structure 18, which exerts a downward force 4 on the load cell 1.

A weighing device usually comprises several of such load cells, supporting a weighing structure in a number of force introduction points, for example in the four corners of a rectangular weighing platform.
A hole 5 may be present in order to fix the weighing structure 18 to the cell. Strain gages are present, preferably in the cavity 11, for producing a signal which is related to the bending force. Through connection 6, the signal is transmitted to the measurement equipment (not shown). Most load cells of this type have a jump 19 in the thickness of the cell, which allows a deformation of the part to the left of this jump, even if the supporting structure 2 extends underneath the whole of the load cell 1.

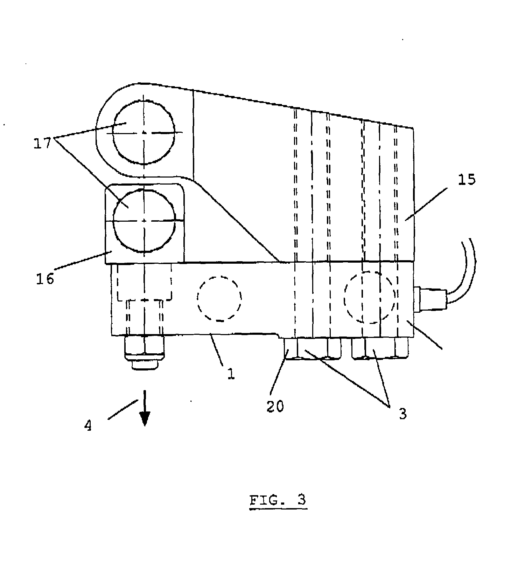

Figures 2 and 3 show prior art examples of how such a load cell may be implemented, in particular in case a tilted position of the supporting structure 2 is to be allowed. In figure 2, the cell is clamped to a first auxiliary element 7, by the two bolts 3. The first element 7 is connected to the supporting structure at point 8, through a universal joint (not shown). A second auxiliary element 9 is bolted to the load cell at the latter's other extremity, and the weighing structure is connected to the element 9 at point 10, through another universal joint. The weighing structure is thus suspended from the base frame, and the load force 4 of the weight bends the load cell downwards.

Figure 3 shows an alternative, wherein the auxiliary elements 15 and 16 are used, which allow the connection points 17 to be placed closer together, leading to advantages in the use as a mobile weighing system.

However, both designs of figure 2 and 3 suffer from one important drawback. The load cell 1 is deformed in such a way that the bolt 20 which is closest to the load cell's centre, is subjected to a tensile strain, which is very much dependent on the applied load. It has been shown that this leads to problems of inaccuracy, due to hysteresis phenomena. This type of load cell should be installed on a flat surface, such as the one shown in figure 1, and the bending force should be directed perpendicular to this surface, and directed towards the surface, as is the case in figure 1. This set-up would ensure minimal strain variation in the bolt 20.

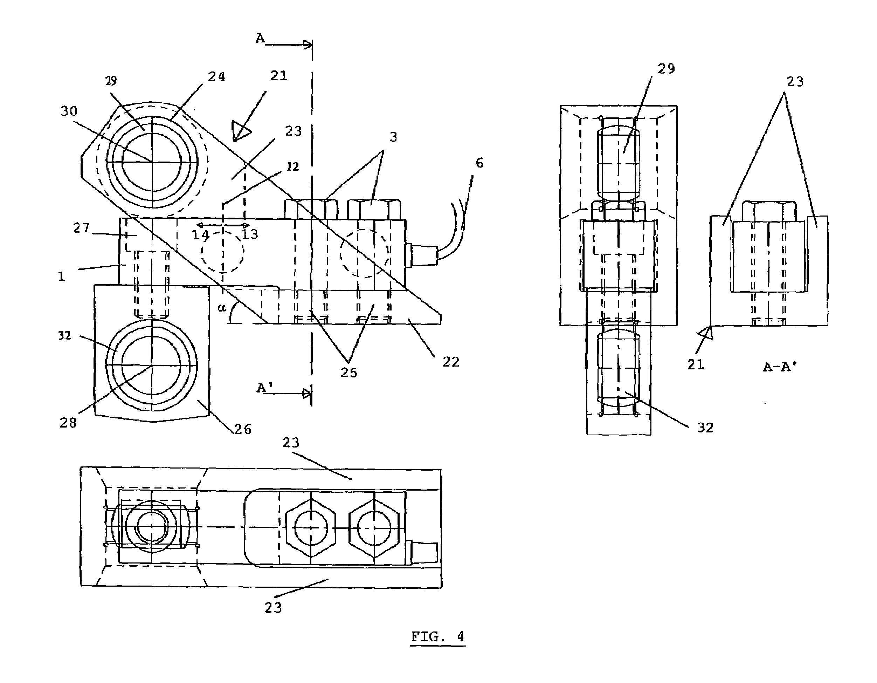

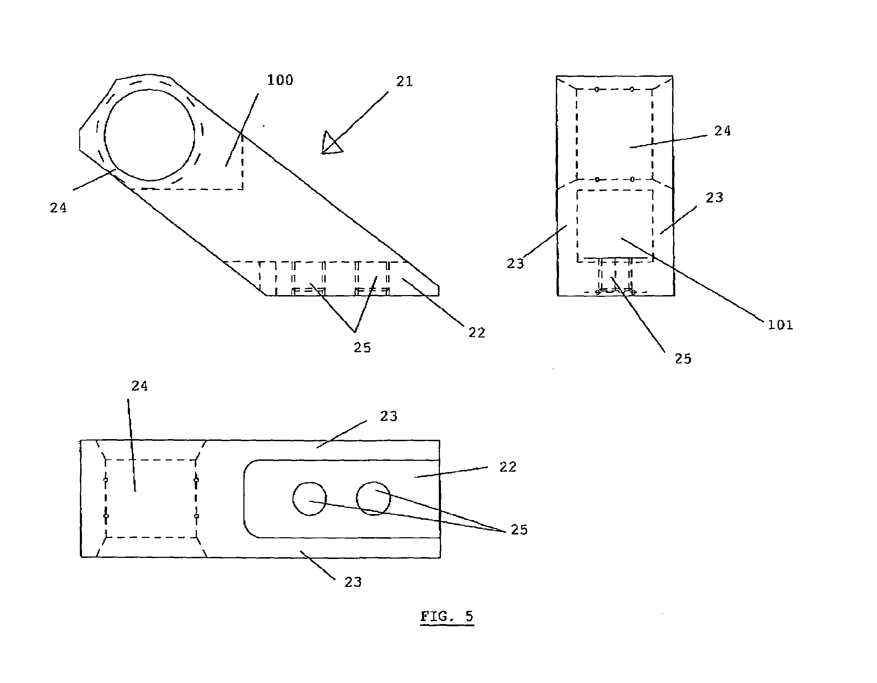

In the design of the invention, shown in figure 4, a special type of auxiliary element 21 is used for connecting the load cell to the supporting structure 2 (not shown). The element 21 is presented in more detail in figure 5. It comprises a base plate 22, to which the load cell can be fixed, preferably bolted, and two sidewalls 23, which rise up on each side of the load cell 1. The part 13 of the load cell which is to the right of the weakened section 12 is bolted to the base plate. Above the other side 14 of the load cell, the walls 23 are connected by a solid part 100, comprising a hole 24, whose centre line is perpendicular to the vertical walls 23. In the embodiment of figure 4, the element 21 is connected to the supporting structure, through a universal joint 29, placed inside the hole 24. The presence of the solid block 100 creates a rectangular opening 101, into which fits the load cell 1. The load cell 1 can be inserted into this opening, until it can be bolted to the base plate 22. For this purpose, holes 25 are present in the base plate 22. In stead of a connection with bolts 3, the load cell may be fixed to the base plate 22 in any other way known in the art. According to a specific embodiment, the load cell and the element 21 form a homogenous block.

The sidewalls 23 preferably have an oblique position (see angle α) with respect to the base plate 22.

A second auxiliary element 26 may be fixed to the load cell, by bolt 27, and is connected to the weighing structure, in point 28, by a universal joint 32. In the preferred embodiment, the points 30 and 28 are placed on the same vertical line. However, small deviations from this situation are possible without departing from the scope of the invention. The point 30 should in any case be positioned on the side of the section 12 which is opposite the part 13.

The same element 21 can be used in a design which is rotated 180° with respect to the one shown in figure 4. In this case, the supporting structure is connected at point 28, to the auxiliary element 26, while the weighing structure is connected to the element 21, at point 30.

The element 21 may be produced in a form which differs from the one shown in figures 4 and 5. The basic characteristics are the base plate 22, and the side walls 23. The walls need not be connected at the top by a solid block 100. They may simply comprise holes or other means which ensure that the element can be properly connected to either the supporting frame or the weighing frame, in a point opposite the part 13. The walls 23 may have a cross section which is different from that of a straight vertical wall. They may be adapted to a special shape of the applied load cell.

The design of figure 4 allows a load to be weighed in a tilted position, due to the presence of the universal joints. Furthermore, the deformation of the load cell 1 while weighing is such that the part 14 of the load cell is bent downwards with respect to the base plate 22 (or the base plate 22 and the part 13 are bent downwards with respect to the part 14, in the case of the 180° rotated position). This way of bending ensures that the strain in bolt 20 remains virtually unchanged during deformation. This is the ideal way of deforming the cell, which improves the accuracy of the measurement.

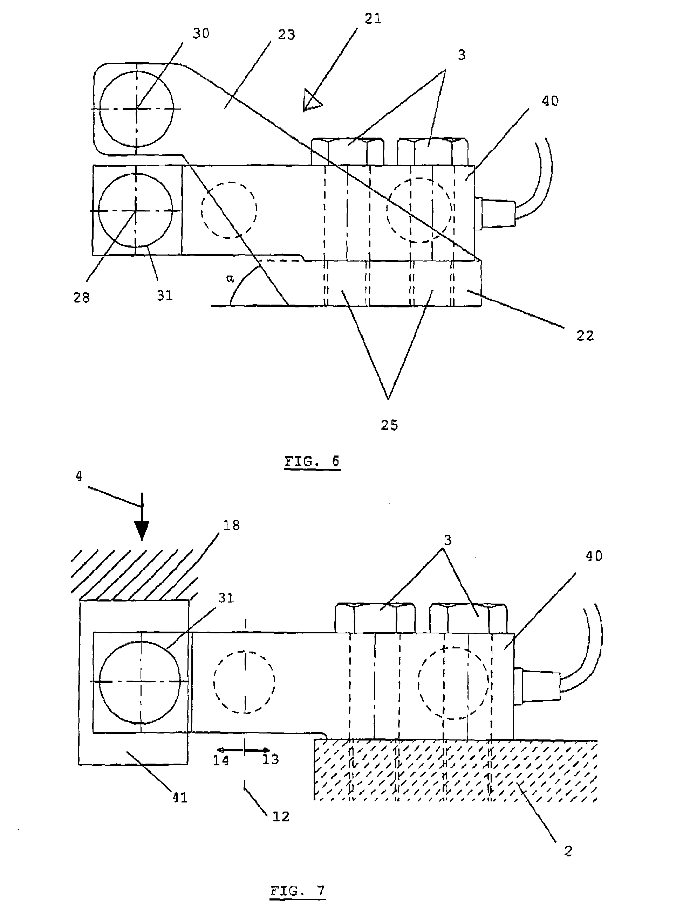

Figure 6 shows an alternative embodiment, which is however equivalent to the one shown in figure 4. The load cell 40 now has a horizontal bore 31 to which the weighing structure can be suspended, preferably through a universal joint. This renders the use of a second auxiliary element 26 superfluous. The sidewalls of the element 21 have a somewhat different shape, which is of course totally equivalent to the one shown in figure 4.

The present invention is related to a weighing device equipped with at least one load cell 1 of the beam type which is installed by way of an auxiliary element having the form of element 21. The invention is equally related to the element 21 itself, to be used in combination with a load cell of the beam type.

The invention is equally related to a weighing device equipped with one ore more load cells such as shown in figure 7. It concerns a load cell 40 which has a horizontal bore 31 at the part 14 which bears the weighing structure 18, and which is fixed, preferably bolted by bolts 3, at its other part 13 to the supporting structure 2. An auxiliary element 41 is connected to the load cell 40, at the part 14, to the left of the weakened section 12. This element 41 is connected to the weighing structure 18 for measuring the load force 4. The use of such a load cell 40 having a horizontal bore 31, fixed rigidly to a supporting structure 2 is new.

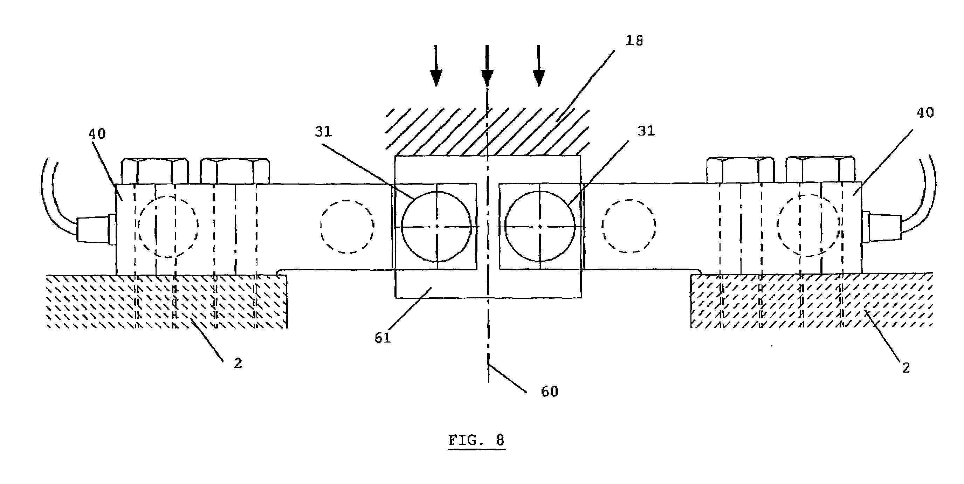

A weighing device according to the invention may equally comprise one or more force introduction points such as shown in figure 8, wherein an auxiliary element 61 is connected to two load cells 40, both comprising a horizontal bore 31, which are opposite each other, see figure 8. They are mirrored with respect to a central plane 60 and both connected in a fixed way to the supporting structure 2. The auxiliary element 61 is connected to both load cells, and to the weighing structure 18. The embodiment of figures 7 and 8 is particularly adapted to a weighing device wherein the supporting structure is fixed to the ground, or to a mobile installation, and wherein the tilting angle of the weighing structure is measured, after which a corrective action can be performed on the measured weight.

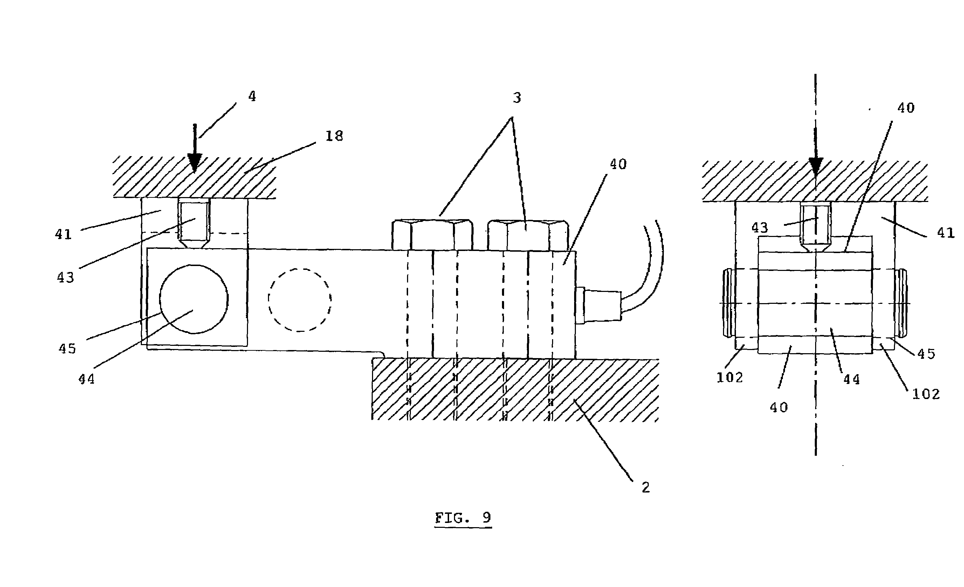

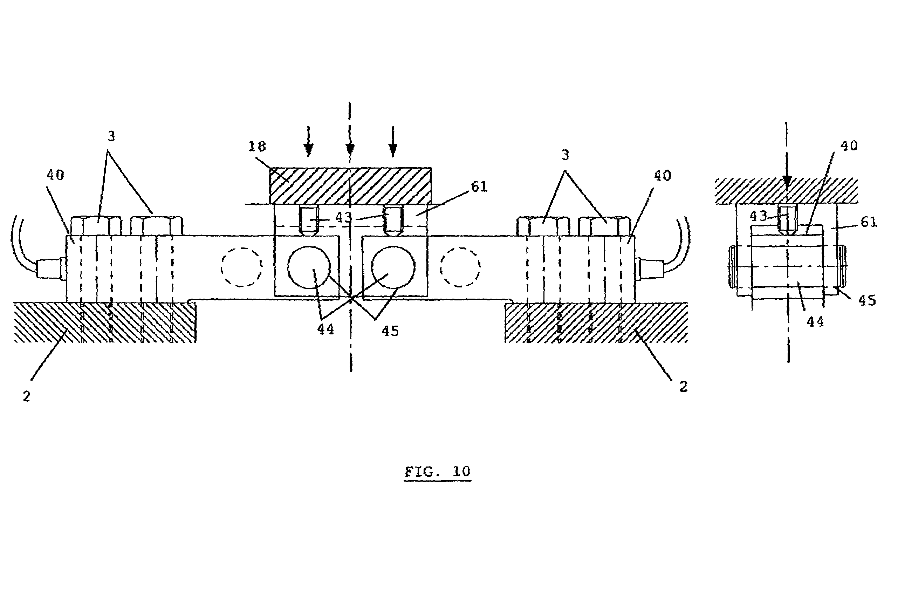

According to a first embodiment, the element 41 is connected to the load cell 40 through a load transmitting element 43, see figure 9 and 10. In the figures shown, this is a bolt 43, which is screwed into a hole in the top of the element 41. The element 61 (figure 10) comprises two such holes and two such positioning bolts 43. The bolt 43 makes contact with the load cell(s) 40 in a limited zone, ensuring an optimal force introduction. The element 41 or 61 may be shaped in the way shown, namely as a reversed 'U' shape, wherein the load cell(s) 40 fit into the space between the U's legs. The U's legs may be connected at the bottom, i.e. the element 41 or 61 may envelop the load cell(s) completely. In any design, the element 41 or 61 comprises two essentially parallel walls 102, each comprising either one (element 41) or two (element 61) holes 45, which allow a pin 44 to be inserted, through these holes, and through the horizontal bore 31 of the load cell(s) 40.

The positioning bolt 43 may be replaced by a ball element, which is clamped between two concave surfaces, one placed on top of the load cell, the other placed into a hole in the element 41 or 61.

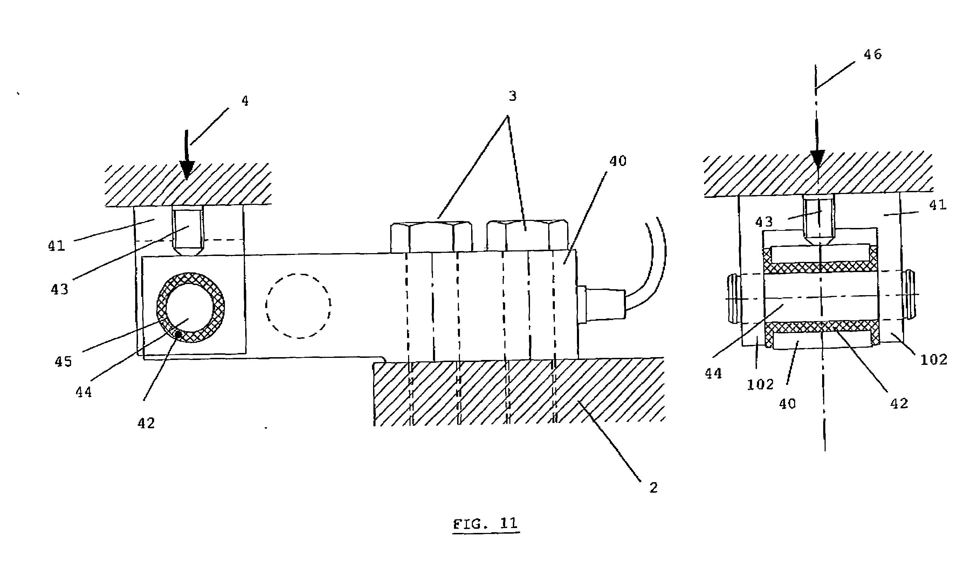

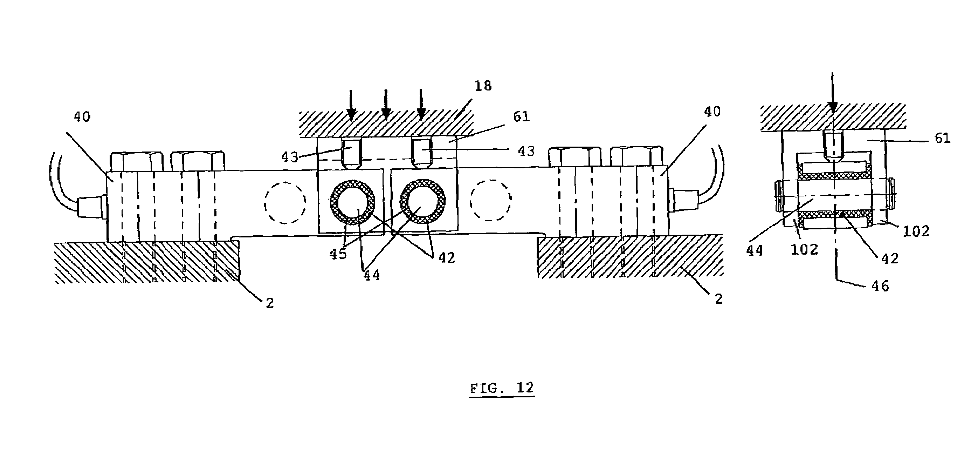

The repeatability of the force introduction may be further improved by applying a flexible element 42, see figure 11 and 12. This may be an element made of any kind of flexible material, such as rubber. The element 42 has a high hardness value, preferably Shore 95°.

The flexible element 42 is placed around the pin 44 (which is reduced in diameter compared to figures 9&10). In this way, the element 42 fills up the space between the pin 44 and the interior of the bore 31. The element 42 further comprises on each side a circular part which is placed between the load cell 40 and the parallel walls 102. In another embodiment, a metal ring is present between the flexible element 42 and the side walls 102 of the auxiliary element 41 or 61.

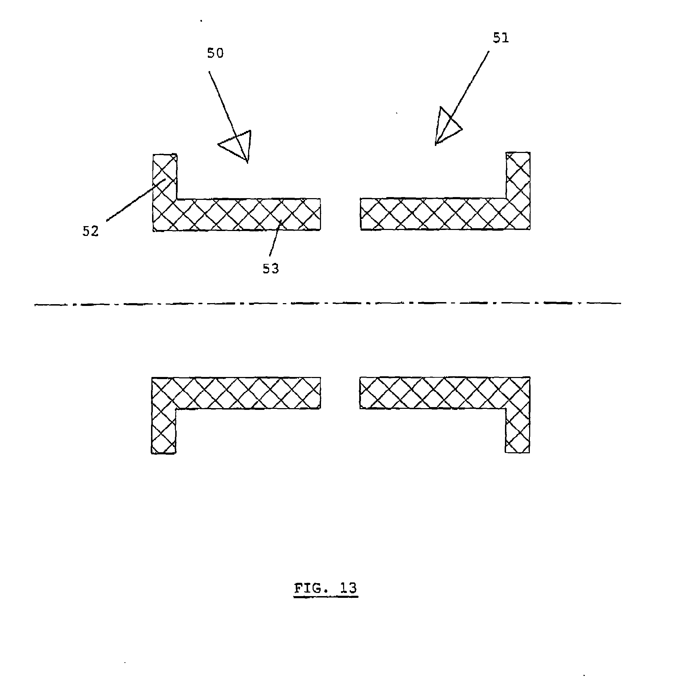

The flexible element 42 preferably consists of two sub-elements 50 and 51, which have a circular base 52 and a cylindrical body 53 (figure 13), and which are inserted on both sides of the bore 31, so that the tubelike bodies make contact in the vicinity of the vertical centre plane 46 of the load cell.

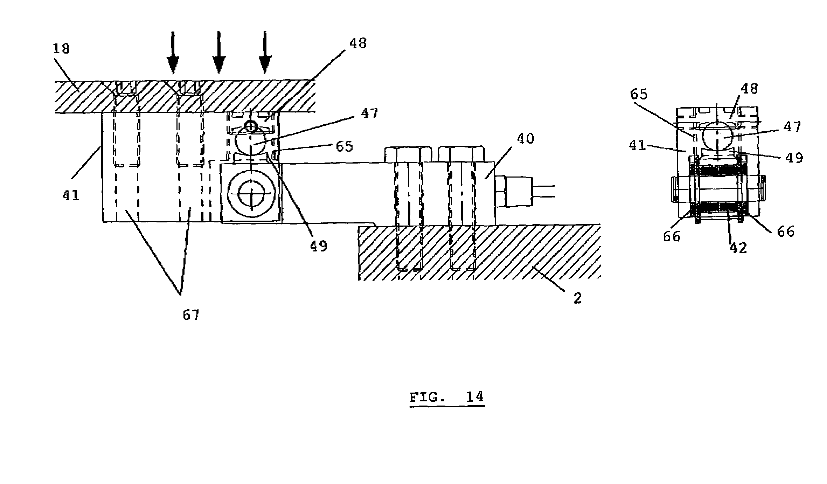

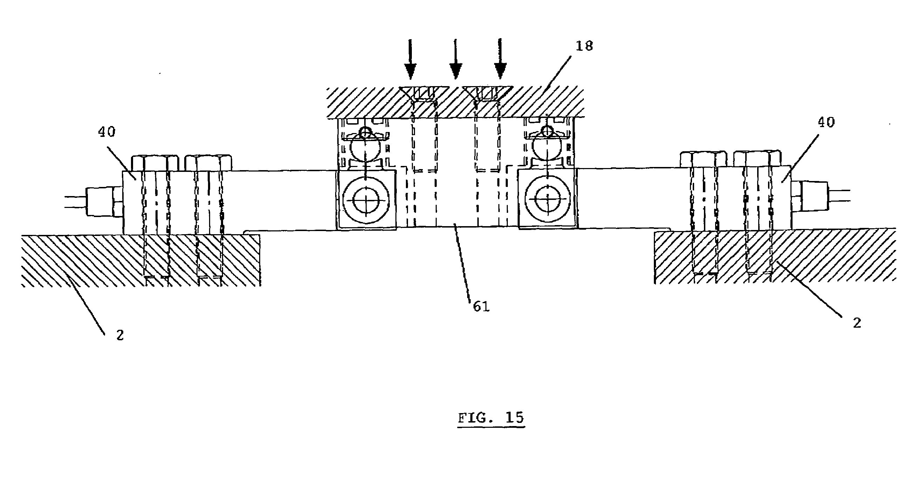

Figures 14 and 15 show another embodiment, wherein the positioning bolt 43 is replaced by a positioning ball 47, clamped between two concave elements 49 and 48. The lower concave element 49 is preferably homogeneously fixed to the load cell 40, while the upper concave element 48 is screwed into a threaded hole 65 in the top of the auxiliary element 41. This element has a special shape in this embodiment, in that it is broader and comprises two holes 67. In the embodiment of figure 14, the flexible element 42 is present, with a metal ring installed between said element and the inside of the auxiliary element 41. Figure 15 shows the double embodiment, having twice the ball element 47.

The connection element 41 or 61, equipped with the flexible element(s) 42, enables a highly repeatable force introduction onto the load cell(s) in question, which is of particular importance in the case where no universal joints are used.

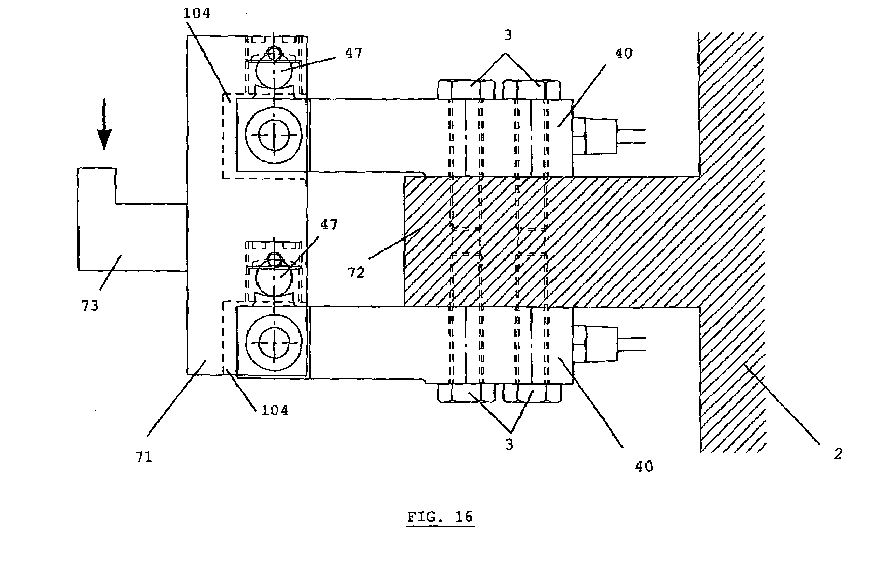

Figure 16 shows another embodiment, wherein an auxiliary element 71 is connected to two load cells 40, both having a horizontal bore 31, and which are fixed rigidly, preferably through an intermediary extension 72, to the supporting structure 2. The auxiliary element 71 comprises openings 104 for allowing the load cells' second parts 14 to be inserted in said openings, and force introduction elements (ball elements 47 are shown, but positioning bolts 43 could be used as well). The connection between the load cells and the element 72 takes place by pins 44, and preferably by flexible elements 42, in the same way as was shown in figures 11 and 12. An extension 73 may be attached to the element 71. This set-up is particularly suited for the measurement of loads, suspended from the extension 73 for example, and for which the exact position of the gravity centre is unknown.

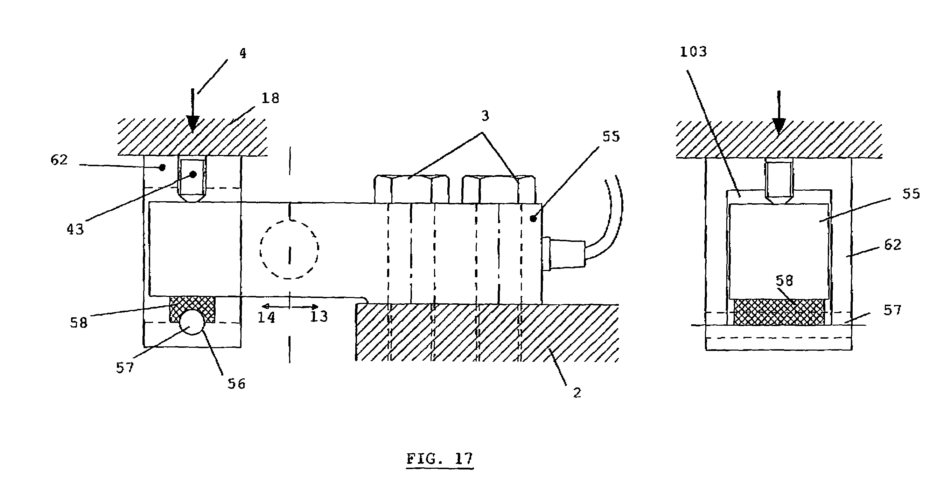

Figure 17 finally shows a last embodiment, wherein a load cell 55 is shown, which is fixed by bolts 3 to a supporting structure 2 and which has no opening, vertical or horizontal in the second part 14. A load cell according to figure 1 or figure 7 may be used also, wherein the respectively vertical hole 5 or horizontal hole 31 is filled up by an appropriate means, such as a bolt or pin. An auxiliary element 62 is connected to the weighing structure 2 thereby carrying the load force 4. A positioning bolt 43 is present, as in figures 9 to 12. The auxiliary element 62 comprises a cavity 103 into which the second part 14 of load cell may be inserted. A flexible element 58 is present at the bottom of said cavity 103 and is pressed by the positioning bolt 43 between the load cell 55 and the bottom of the cavity 103. In the embodiment shown, the force introduction is further improved by a pin 57, which fits into an opening 56 in the auxiliary element 62. The opening 56 is such that it forms a semi-circular groove in the bottom of the cavity 103. The form of the flexible element 58 is such that it comprises a similar groove, so that it may fit on top of the pin 57, once the latter has been inserted into the opening 56. This design achieves the same effect as the one shown in figures 11 and 12.

## Claims

1. Device for weighing a load, comprising a supporting structure (2), a weighing structure (18), and one or more beam type load cells (40), each load cell comprising a first part (13) and a second part (14), with a separating section (12) between both of said parts, one of said parts (13,14) being connected to said supporting structure (2) while the other of said parts (13,14) is connected to said weighing structure (18),
**characterized in that** at least one load cell (40) is rigidly fixed, preferably bolted (3) at said first part (13) to said supporting structure (2), said load cell comprising a bore (31), the centre line of which is essentially horizontal when said cell is in a horizontal position, and wherein an auxiliary element (41,61) is connected to said second part (14), said auxiliary element (41,61) being connected to said weighing structure (18).

2. The device according to claim 1, wherein said auxiliary element (41,61) comprises :
- two essentially parallel walls (102), each comprising at least one hole (45), so that said load cell (40) can be placed in between said parallel walls (102),
- at least one force introduction element (43), which is in contact with said load cell (40),
and wherein said element (41, 61) is connected to said load cell (40) by a pin (44) which passes through said holes (45) and through said bore (31).

3. The device according to claim 2, wherein said auxiliary element (41, 61) comprises at least one threaded hole in its upper surface, and wherein said force introduction element (43) is a bolt which is screwed into said hole in the upper surface of said auxiliary element (41,61).

4. The device according to claim 2, wherein said force introduction element is a ball (47), which is clamped between two concave elements (48,49).

5. The device according to claim 3 or 4, wherein a flexible element (42) is present, which has a cylindrical part which fills up the space between said pin (44) and the interior of said bore (31), and a circular part on each side of said cylindrical part, each of said circular parts being present between said essentially parallel walls (102) and said load cell (40).

6. The device according to claim 5, wherein said flexible element (42) is made of a material having a hardness value of Shore 95°.

7. The device according to claim 5 or 6, wherein said flexible element (42) comprises two sub-elements (50,51), both comprising a cylindrical part (53) and a circular part (52).

8. The device according to any one of claims 5 to 7, wherein a metal ring is present between each side of said flexible element (42) and said load cell (40).

9. The device according to any one of claims 1 to 8, wherein at least one auxiliary element (61) is connected to two load cells (40), said load cells being placed opposite each other, one load cell being mirrored with respect to the other.

10. The device according to any one of claims 1 to 8, wherein at least one auxiliary element (71) is connected to two load cells (40), said load cells being placed on top of each other.
